# EUROPÄISCHE PATENTSCHRIFT

(11) **EP 2 021 928 B1**
(45) Veröffentlichungstag und Bekanntmachung des Hinweises auf die Patenterteilung: **05.10.2011**
(21) Anmeldenummer: 06753213.5
(22) Anmeldetag: 30.05.2006
(51) Int. Cl.: G06F 12/08

(54) **VERFAHREN UND VORRICHTUNG ZUR BESCHLEUNIGUNG VON PROZESSOR-ZUGRIFFEN**
METHOD AND DEVICE FOR INCREASING THE ACCESS SPEED OF A PROCESSOR
PROCÉDÉ ET DISPOSITIF POUR L'ACCÉLÉRATION D'ACCÈS D'UN PROCESSEUR

(43) Veröffentlichungstag der Anmeldung: 11.02.2009
(73) Patentinhaber: SIEMENS AKTIENGESELLSCHAFT, 80333 München (DE)
(72) Erfinder: KAUER, Karl, 91052 Erlangen (DE); MÖSSNER, Rudolf, 93133 Burglengenfeld (DE)
(86) Internationale Anmeldenummer: PCT/DE2006/000930
(87) Internationale Veröffentlichungsnummer: WO 2007/137533

(56) Entgegenhaltungen:
- US-A1- 2003 105 926
- US-A1- 2004 215 892
- US-A1- 2004 268 085
- JOUPPI N P ED - INSTITUTE OF ELECTRICAL AND ELECTRONICS ENGINEERS: "Improving direct-mapped cache performance by the addition of a small fully-associative cache and prefetch buffers" PROCEEDINGS OF THE ANNUAL INTERNATIONAL SYMPOSIUM ON COMPUTER ARCHITECTURE. SEATTLE, MAY 28 - 31, 1990, LOS ALAMITOS, IEEE COMP. SOC. PRESS, US, Bd. SYMP. 17, 28. Mai 1990 (1990-05-28), Seiten 364-373, XP010019291 ISBN: 0-8186-2047-1

## Beschreibung

Die Erfindung betrifft ein Verfahren und eine Vorrichtung zur Beschleunigung von Zugriffen eines Prozessors auf Daten in einem Hauptspeicher mittels eines Zwischenspeichers, wobei vom Prozessor angeforderte Daten mit im Zwischenspeicher vorhandenen Daten verglichen werden, die im Falle einer Übereinstimmung mit den angeforderten Daten an den Prozessor übertragen werden, wobei in Abhängigkeit von den angeforderten Daten weitere Daten im voraus aus dem Hauptspeicher in den Zwischenspeicher übertragen werden.

Ein derartiges Verfahren bzw. eine derartige Vorrichtung kommt auf allen Gebieten zum Einsatz, in denen Prozessoren zur Datenverarbeitung auf Daten in einem Hauptspeicher zugreifen müssen, da das Lesen von Daten aus einem Hauptspeicher wesentlich mehr Zeit braucht als der Prozessor zum Verarbeiten der Daten benötigt. Dieses wird im Folgenden genauer anhand der Abarbeitung eines Programmes im Prozessor beschrieben, wobei in diesem Fall die Daten Befehls-Daten des Programmes sind. Der beschriebene Vorgang ist aber natürlich nicht auf Befehls-Daten beschränkt, sondern eignet sich für jedweden Zugriff eines Prozessors auf Daten in einem Hauptspeicher.

Heutige Prozessoren sind in der Lage, pro Takt einen oder sogar mehrere Befehle abzuarbeiten. Da die Prozessoren immer höher getaktet werden, besteht ein großes Problem darin, ihnen die zu verarbeitenden Befehls-Daten in der gleichen hohen Geschwindigkeit zur Verfügung zu stellen wie sie sie verarbeiten können. Bei größeren Programmen müssen die Befehls-Daten nämlich aus dem wesentlich langsameren Hauptspeicher geholt werden. Dessen Zugriffszeit kann 100-1000mal langsamer sein als die Zeitdauer eines Prozessor-Taktes. Ohne Zusatzmaßnahmen würde der Prozessor bei jedem Zugriff auf Befehls-Daten im Hauptspeicher also um den Faktor 100-1000 abgebremst werden.

Eine mögliche bekannte Lösung ist die Verwendung von schnellen Zwischenspeichern, sogenannten Caches. Hierbei wird der vom Prozessor benötigte Befehlsdatenstrom in kleinen Blöcken (meist 8 bis 16 hintereinander liegende Befehle) aus dem Hauptspeicher in einem schnellen Zwischenspeicher übertragen. Dadurch fällt pro Block nur einmal die hohe Hauptspeicher-Zugriffszeit an, da heutige Hauptspeicher (z.B. DDR2-Speicher) nur beim ersten Datum langsam sind; die zu einem Block dazugehörigen Folgedaten werden mit ähnlich hoher Geschwindigkeit wie der Prozessor-Takt übertragen. Wenn der Cache z.B. mit der gleichen Frequenz wie der Prozessor betrieben wird, muss der Prozessor also nur beim ersten Datum eines neuen Blockes die Hauptspeicher-Zugriffszeit warten, die Folgedaten des Blocks kann er dann mit seiner vollen Geschwindigkeit aus dem Cache abarbeiten. Sind die gerade benötigten Befehls-Daten bereits im Cache vorhanden, weil diese schon vorher benutzt wurden, kann der Prozessor diese sogar ohne jegliche Verzögerung ausführen.

Eine weitere bekannte Maßnahme ist es, nach dem Laden des aktuell vom Prozessor benötigten Befehls-Datenblocks, bereits im voraus den nächsten, daran anschließenden Block aus dem Hauptspeicher zu holen (ein sogenannter Prefetch) und zwischenzuspeichern. Greift der Prozessor als nächstes tatsächlich auf diese Daten zu, werden diese ihm sofort übergeben, ohne die lange Hauptspeicher-Zugriffszeit abwarten zu müssen. Greift der Prozessor allerdings auf eine andere Hauptspeicheradresse zu, so werden die vorab geholten und zwischengespeicherten Befehls-Daten verworfen.

Aus US 4 714 994 ist ein Prefetch-Speicher bekannt, der neben den erwarteten nächsten Befehlen auch die zuletzt ausgeführten Befehle behält, so dass sowohl kurze Vorwärts-Referenzen als auch kurze Programmschleifen von den gespeicherten Befehlen abgedeckt werden. Verzweigungen zu Adressen außerhalb des gespeicherten Bereiches führen allerdings auch hier zu einer Löschung des Prefetch-Speichers.

In US 6 931 494 B2 ist ein Prefetch-Speicher beschrieben, in dem zwei Blöcke zur Speicherung der vorab aus dem Hauptspeicher geholten Daten vorgesehen sind. Wird dabei auf den ersten Block vor dem zweiten Block zugegriffen, wird ein Rückwärts-Prefetch bezüglich des ersten Blockes durchgeführt, andernfalls ein Vorwärts-Prefetch bezüglich des zweiten Blockes. Rückwärts-Prefetch meint dabei das Holen von Daten aus Bereichen des Hauptspeichers, die sich mit abnehmendem Adressbereich an die bereits gespeicherten Daten anschließen.

In US 6 990 558 B2 wird neben den Prefetch-Daten ein Satz von weiteren Daten in einem Cache-Speicher bereitgehalten, wobei die Zugriffe auf die jeweiligen Daten mitgezählt werden. Bei einem neuen Prefetch-Vorgang werden die bislang im Prefetch-Speicher gespeicherten Daten verworfen, wenn auf sie weniger häufig zugegriffen wurde als auf Daten im Cache-Speicher, andernfalls werden die bislang im Prefetch-Speicher gespeicherten Daten in den Cache-Speicher überführt.

In US 2006/0053256 A1 kann die Anzahl der Prefetch-Vorgänge begrenzt werden. Hierdurch wird der Tatsache Rechnung getragen, dass die Anzahl der sequentiell vom Prozessor abzuarbeitenden Befehle abhängig ist von der Art der ausgeführten Anwendung. Durch die Begrenzung können somit unnötige Prefetch-Vorgänge und damit einhergehend eine Leistungsreduktion vermieden werden.

Jouppi, Norman P. "Improving Direct-Mapped Cache Performance by the Addition of a Small Fully-Associative Cache and Prefetch Buffers" beschreibt einen sogenannten Stream-Buffer, welcher ein "normaler" Prefetch Buffer ist, welcher bevorzugt Daten im FIFO einspeichert. In Kapitel 4.2 werden Multi-Way Stream Buffer vorgeschlagen. Diese werden realisiert durch die Parallelschaltung von n Stream Buffern.

US2003/0105926 beschreibt eine Kombination aus einem normalen Cache und einem Prefetch Cache. Diese Kombination soll verhindern, dass der normale Cache mit bestimmten Daten überflutet wird.

Allen bekannten Prefetch-Mechanismen ist gemein, dass sie bei einem Zugriff des Prozessors auf Daten, die sich nicht im Prefetch-Speicher befinden, diesen für den neuen Prefetch-Vorgang löschen.

Der Erfindung liegt die Aufgabe zugrunde, ein Verfahren bzw. eine Vorrichtung zur Beschleunigung von Zugriffen eines Prozessors auf Daten in einem Hauptspeicher anzugeben, mittels dem bzw. der Daten aus mehreren Prefetch-Vorgängen in einem Prefetch-Speicher gespeichert werden können.

Diese Aufgabe wird bei einem Verfahren bzw. einer Vorrichtung der eingangs genannten Art dadurch gelöst, dass im Zwischenspeicher die im Hauptspeicher auf die angeforderten Daten folgenden Daten als ein Eintrag in einem Bereich gespeichert werden, wobei für sich an angeforderte Daten, die im Zwischenspeicher vorhanden sind, anschließende Daten derselbe Bereich im Zwischenspeicher verwendet wird, wobei für sich an angeforderte Daten, die nicht im Zwischenspeicher vorhanden sind, anschließende Daten ein neuer Bereich im Zwischenspeicher angelegt wird und wobei im Zwischenspeicher Daten in zumindest zwei Bereichen speicherbar sind und die Anzahl und Gröβe der Bereiche im Zwischenspeicher parametrierbar sind.

Durch die Unterteilung des Zwischenspeichers in mindestens zwei Bereiche ist es möglich, auch z.B. Programmverzweigungen des Prozessors effektiv zu unterstützen. Wird innerhalb eines linearen Programmablaufs vom Prozessor in ein Unterprogramm verzweigt, werden die gerade vorab geladenen Daten im Zwischenspeicher gehalten. Die neuen vom Hauptspeicher geholten Daten für das jetzt abzuarbeitende Unterprogramm werden in einem weiteren Bereich des Zwischenspeichers abgelegt. Führt der Prozessor einen Rücksprung vom Unterprogramm zum vorher ausgeführten Programmteil aus, dann stehen die benötigten (Befehls-)Daten noch in dem vorherigen Bereich und können dem Prozessor sofort, also ohne langsamen Hauptspeicherzugriff, zur Verfügung gestellt werden.

Die verschiedenen Prefetch-Einträge werden über eine Speicherverwaltung, ähnlich wie bei einem Cache, verwaltet. Im Prefetch-Speicher können n einzelne Einträge verwaltet werden, wobei n >= 2 ist, abhängig von der Größe des Prefetch-Speichers und der Größe der Prefetch-Einträge. Mit n Prefetch-Einträgen können beispielsweise n verschachtelte Unterprogrammverzweigungen eines Prozessors unterstützt werden, ohne dass Daten verworfen werden müssen. Erst bei einer Verschachtelungstiefe von n+1 Unterprogrammen muss für neue Daten ein alter Prefetch-Eintrag verworfen werden.

Damit die Prefetch-Vorrichtung Leseanforderungen vom Prozessor erkennt, ist sie zwischen diesem und dem Hauptspeicher angeordnet. Über ein Prozessor-Interface nimmt sie Lesezugriffe auf und prüft mit Hilfe der Speicherverwaltung, ob zum Lesezugriff passende Daten im Prefetch-Speicher vorhanden sind. Wenn ja, wird der Prozessor direkt mit diesen Daten vom Zwischenspeicher versorgt und parallel dazu neue Prefetch-Daten über ein Hauptspeicher-Interface vom Hauptspeicher geholt. Wenn nein, werden die vom Prozessor angeforderten Daten über das Hauptspeicher-Interface vom Hauptspeicher gelesen und sobald diese verfügbar sind, über das Prozessor-Interface an den Prozessor weitergegeben. Anschließend werden sofort Daten von der Folgeadresse des Prozessorzugriffs vom Hauptspeicher geholt und als ein neuer Prefetch-Eintrag in einem neuen Bereich im Zwischenspeicher abgespeichert.

In einer vorteilhaften Ausführungsform sind die Anzahl und Größe der Bereiche im Zwischenspeicher parametrierbar. So können beispielsweise bei einem 4 kB großen Prefetch-Speicher 16 Bereiche à 256 Byte, 8 Bereiche à 512 Byte, 4 Bereiche à 1024 Byte oder 2 Bereiche à 2048 Byte verwendet werden. Je nach vom Prozessor ausgeführtem Programm kann so die Prefetch-Vorrichtung optimal angepasst werden.

In einer weiteren vorteilhaften Ausführungsform wird die Größe (und damit indirekt auch die maximale Anzahl) der Bereiche im Zwischenspeicher dynamisch in Abhängigkeit von der zugehörigen Hauptspeicheradresse zugewiesen, wobei die Zuordnung der Hauptspeicheradressen zu den Größen der Bereiche parametrierbar ist. Je nach Adressbereich, in dem die Anfangsadresse eines Prefetch-Eintrages liegt, wird eine bestimmte Größe für einen neu anzulegenden Prefetch-Eintrag benutzt. Dazu gibt es für jede unterstützte Eintragsgröße spezielle Register, in denen der dazugehörige Adressbereich parametriert werden kann. Bei einem neu anzulegenden Prefetch-Eintrag wird die Größe benutzt, deren parametrierter Adressbereich zu der Hauptspeicheradresse des Prefetch-Eintrages passt. Dadurch ist die Anpassung der Prefetch-Vorrichtung an das ausgeführte Programm noch optimaler möglich.

In einer weiteren vorteilhaften Ausführungsform ist zumindest ein Bereich im Zwischenspeicher größer als die mit einem Lesezugriff aus dem Hauptspeicher übertragbare Datenmenge, und der noch freie Teil des Bereiches wird mit Daten aus dem Hauptspeicher aufgefüllt, während der Prozessor keine neuen Daten anfordert, weil er z.B. gerade ein Programm aus seinem internen Cache abarbeitet. Durch die größere Menge an Daten steigt die Wahrscheinlichkeit, dass bei den kommenden Prozessor-Lesezugriffen die Daten aus dem schnellen Prefetch-Speicher genommen werden können und nicht vom langsamen Hauptspeicher geholt werden müssen.

In einer weiteren vorteilhaften Ausführungsform sind vom Prozessor angeforderte und im Zwischenspeicher vorhandene Daten nach Übertragung an den Prozessor aus dem Zwischenspeicher löschbar. Da beispielsweise bei einer linearen Programmbearbeitung Befehls-Daten, die vom Prozessor angefordert wurden, im weiteren Verlauf nicht mehr benötigt werden, kann der mit ihnen belegte Speicherplatz im Prefetch-Speicher wieder freigegeben werden.

In einer weiteren vorteilhaften Ausführungsform ist zumindest ein Bereich im Zwischenspeicher größer als die mit einem Lesezugriff aus dem Hauptspeicher übertragbare Datenmenge und ein mit löschbaren Daten belegter Teil des Bereiches im Zwischenspeicher durch sich an die im restlichen Teil des Bereiches vorhandenen Daten anschließende Daten aus dem Hauptspeicher auffüllbar. Wird ein Prozessor-Lesezugriff mit Daten aus einem Prefetch-Eintrag bedient, werden anschließend genau diese Daten aus dem Prefetch-Eintrag gelöscht. Die noch im Eintrag befindlichen Folgedaten bleiben aber weiter erhalten. Der durch die gelöschten Daten freigewordene Speicherbereich wird wieder mit neuen Prefetch-Daten, die sich an die noch im Eintrag befindlichen Daten schließen, aufgefüllt. Jeder Prefetch-Bereich ist also als Umlaufspeicher organisiert, der nach jeder Datenentnahme durch einen Prozessorzugriff immer wieder nachgeführt wird, wodurch der Prefetch-Eintrag nie leerläuft.

In einer weiteren vorteilhaften Ausführungsform werden die Einträge in den jeweiligen Bereichen des Zwischenspeichers mit einer LRU- (Least-Recently-Used-) Nummer gekennzeichnet, die eine zeitliche Reihenfolge der Zugriffe des Prozessors auf die jeweiligen Bereiche angibt. Der Eintrag, der zuletzt benutzt wurde, bekommt z.B. die Nummer 0, der vorherbenutzte die Nummer 1 usw.

In einer weiteren vorteilhaften Ausführungsform wird zumindest ein Bereich, beginnend mit dem frühestgenutzten Bereich im Zwischenspeicher, mit einem neu anzulegenden Bereich, für den im Zwischenspeicher kein hinreichender Platz mehr verfügbar ist, überschrieben. Das Verwerfen von alten Prefetch-Einträgen aus dem Prefetch-Speicher erfolgt also nach dem Last-Recently-Used-Prinzip. Wird ein neuer Prefetch-Eintrag angelegt und es sind bereits alle verfügbaren Bereiche benutzt (also der Zwischenspeicher voll), muss ein alter Eintrag gelöscht werden. Werden die Einträge mit einer LRU-Nummer wie oben angegeben gekennzeichnet, wird der Eintrag mit der höchsten LRU-Nummer gelöscht. Der Grund, warum der älteste Eintrag gelöscht wird, ist, dass hier die Wahrscheinlichkeit am geringsten ist, dass die Daten noch vom Prozessor benötigt werden.

In einer weiteren vorteilhaften Ausführungsform sind bei mehr als einem noch nicht vollständig mit Daten gefüllten Bereich die jeweiligen Bereiche, beginnend mit dem letztgenutzten Bereich, mit Daten aus dem Hauptspeicher auffüllbar. Das Nachladen eines einzelnen Prefetch-Eintrags wird unterbrochen, wenn der Prozessor Daten aus einem anderen Eintrag oder Daten, die noch nicht im Zwischenspeicher vorhanden sind, anfordert. Dadurch kann die Situation entstehen, dass mehrere Prefetch-Einträge noch nicht vollständig mit Daten gefüllt sind. Wenn der Prozessor momentan keine neuen Leseanforderungen stellt und der aktuelle Prefetch-Eintrag vollständig geladen ist, wird das Nachladen älterer Prefetch-Einträge fortgesetzt. Die Auswahl, welcher Eintrag als nächstes geladen wird, erfolgt nach dem LRU-Prinzip, s.o. Derjenige Eintrag, von allen noch nicht vollständig gefüllten Einträgen, der die niedrigste LRU-Nummer hat, wird als erste gefüllt. Dadurch ist die Wahrscheinlichkeit am größten, dass die Daten zuerst geholt werden, die der Prozessor auch tatsächlich als nächstes benötigt.

In einer weiteren vorteilhaften Ausführungsform wird das Anlegen eines neuen Bereiches durch vom Prozessor auf ein dafür vorgesehenes Register geschriebene Daten unter Übergabe der gewünschten Hauptspeicheradresse ausgelöst. Somit kann ein neuer Prefetch nicht nur durch einen Lesezugriff des Prozessors, sondern auch durch einen Prefetch-Auftrag per Schreiben auf das dafür vorgesehene Register angestoßen werden. Während bei einem Lesezugriff des Prozessors als vorabzurufende Adresse die Hauptspeicheradresse der sich an die angeforderten Daten anschließenden Daten eingetragen wird, ist dies bei einem Prefetch-Auftrag per Registerzugriff direkt der Registerwert.

In einer weiteren vorteilhaften Ausführungsform weist eine Speicherverwaltung für jeden Eintrag im Zwischenspeicher die notwendigen Informationen wie insbesondere die zugehörige Hauptspeicheradresse, ein Valid-Bit zur Kennzeichnung der Gültigkeit der Daten und ein Refill-Bit zur Kennzeichnung der Notwendigkeit zum Auffüllen des Bereiches mit Daten aus dem Hauptspeicher auf. Mit den Valid-Bits wird vermerkt, welche Bereiche gültige Daten beinhalten. Die Refill-Bits zeigen an, dass noch Daten aus dem Hauptspeicher geladen werden müssen. Ist für einen Bereich ein Valid-Bit oder ein Refill-Bit gesetzt, zeigt dies auch an, dass er in Benutzung, also nicht mehr frei ist. Weitere Informationen zu den Bereichen können beispielsweise ein Delete-Bit zur Kennzeichnung eines zu löschenden und damit überschreibbaren Bereichs sein, ein Active-Bit zur Kennzeichnung des aktiven Bereichs sowie die oben beschriebene LRU-Nummer.

In einer weiteren vorteilhaften Ausführungsform ist der Zwischenspeicher in Anteile fester Größe unterteilt, die zu den jeweiligen Bereichen zusammenfassbar sind. Hierfür enthalten die einzelnen Anteile Längenbits, die angeben, wie viele Anteile zu einem Bereich zusammengefasst sind. Ein Anteil kann zu einem Zeitpunkt immer nur einem Bereich angehören. Die Anzahl der Anteile, die zu einem Bereich zusammengefasst sind, und damit die Größe des Bereichs, wird über die gesamte Zeit, in der dieser Bereich aktiv ist, beibehalten.

In einer weiteren vorteilhaften Ausführungsform sind die Anteile fester Größe in Blöcke fester Größe unterteilt, deren Größe der mit einem Lesezugriff an den Prozessor übertragbaren Datenmenge entspricht. Hierbei sind nun für jeden Block Active-Bits und Refill-Bits vorgesehen, da nicht der gesamte Anteil fester Größe zugleich mit Daten gefüllt wird, sondern blockweise. Auf diese Weise stehen dem Prozessor bereits nach dem Eintrag eines Blocks die entsprechenden Daten zur Verfügung und nicht erst, wenn die Daten des gesamten Eintrags geladen sind.

In einer weiteren vorteilhaften Ausführungsform wird der Zwischenspeicher über ein AHB- (Advanced High-performance Bus-) Interface mit dem Hauptspeicher verbunden. Der Prefetch beginnt bei der ersten Lesesequenz mit einem ersten AHB-Interface und nutzt dann bei den nächsten Lesezugriffen immer abwechselnd ein zweites AHB-Interface, dann wieder das erste Interface usw.

In einer weiteren vorteilhaften Ausführungsform werden beim Anlegen eines neuen Bereiches die Bereiche als löschbar gekennzeichnet, die eine Hauptspeicheradresse aufweisen, die innerhalb des Adressbereichs des neuen Bereiches liegt. Auf diese Weise wird verhindert, dass es zwei aktive Bereiche mit gleicher Hauptspeicheradresse gibt, deren Inhalt im Zwischenspeicher gespeichert ist.

In einer weiteren vorteilhaften Ausführungsform werden beim Verschieben des Adressbereichs eines Bereiches durch Löschen der an den Prozessor übertragenen Daten und Auffüllen mit neuen Daten aus dem Hauptspeicher die Bereiche als löschbar gekennzeichnet, die eine Hauptspeicheradresse aufweisen, die innerhalb des verschobenen Adressbereiches liegt. Auf diese Weise wird wiederum verhindert, dass es zwei aktive Bereiche mit gleicher Hauptspeicheradresse gibt, deren Inhalt im Zwischenspeicher gespeichert ist.

In einer weiteren vorteilhaften Ausführungsform wird die Prefetch-Vorrichtung in einer speicherprogrammierbaren oder einer numerischen Steuerung verwendet. In Anwendungsgebieten, in denen derartige Steuerungen Verwendung finden, wie insbesondere in Automatisierungssystemen, ist eine unverzögerte Ausführung von Programmen durch eine Beschleunigung von Prozessorzugriffen auf Daten in einem Hauptspeicher häufig besonders wichtig.

In einer weiteren vorteilhaften Ausführungsform ist die Vorrichtung in einen Prozessor oder in ein Bus-Interface integrierbar.

Im Folgenden wird die Erfindung anhand der in den Figuren dargestellten Ausführungsbeispiele näher beschrieben und erläutert. Es zeigen:
- FIG 1: ein Blockschaltbild einer erfindungsgemäßen Pre- fetch-Vorrichtung,
- FIG 2: die Zuordnung der in der Speicherverwaltung gespei- cherten Informationen zu den jeweiligen Prefetch- Einträgen.

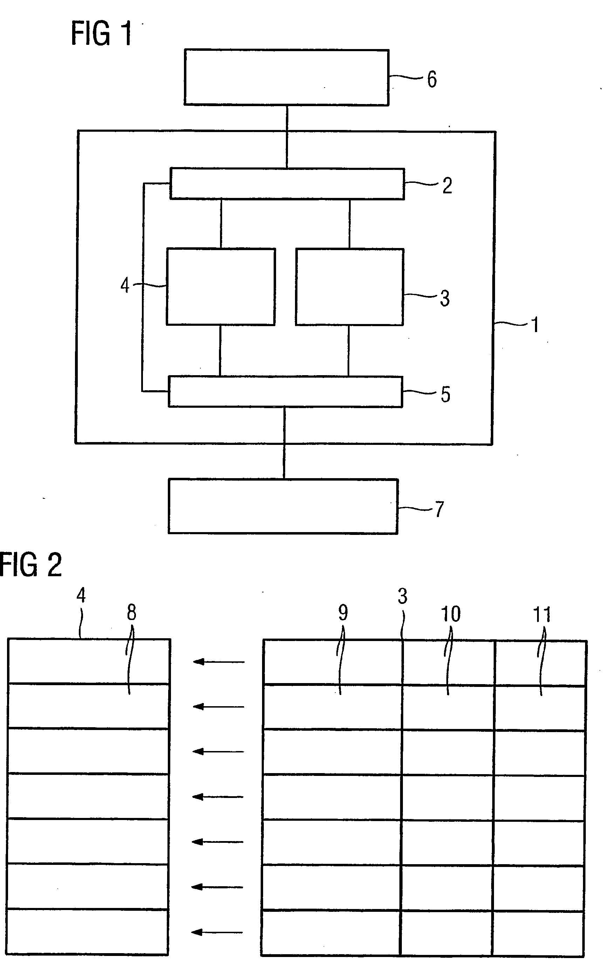

Fig 1 zeigt ein Blockschaltbild einer erfindungsgemäßen Prefetch-Vorrichtung 1. Die Prefetch-Vorrichtung 1 umfasst ein Prozessor-Interface 2, ein Hauptspeicher-Interface 5 sowie jeweils einen dazwischen angeordneten Zwischenspeicher 4 und eine Speicherverwaltung 3.

Damit die Prefetch-Vorrichtung 1 Leseanforderungen vom Prozessor 6 erkennt, ist sie zwischen diesem und dem Hauptspeicher 7 angeordnet. Über ihr Prozessor-Interface 2 nimmt sie Lesezugriffe vom Prozessor 6 auf und prüft mit Hilfe der Speicherverwaltung 3, ob zum Lesezugriff passende Daten im Zwischenspeicher 4 vorhanden sind. Wenn ja, wird der Prozessor 6 direkt mit diesen Daten vom Zwischenspeicher 4 versorgt und parallel dazu neue Prefetch-Daten über das Hauptspeicher-Interface 5 vom Hauptspeicher 7 geholt. Wenn nein, werden die vom Prozessor 6 angeforderten Daten über das Hauptspeicher-Interface 5 vom Hauptspeicher 7 gelesen und sobald diese verfügbar sind über das Prozessor-Interface 2 an den Prozessor 6 weitergegeben. Anschließend werden sofort Daten von der Folgeadresse des Prozessorzugriffs vom Hauptspeicher 7 geholt und in einem neuen Prefetch-Eintrag im Zwischenspeicher 4 abgespeichert.

Fig 2 zeigt die Zuordnung der in der Speicherverwaltung 3 gespeicherten Informationen 9-11 zu den jeweiligen Prefetch-Einträgen 8 im Zwischenspeicher 4. Im Zwischenspeicher 4 sind n Prefetch-Einträge 8 gespeichert, wobei jede Zeile in der Darstellung des Zwischenspeichers 4 einen Eintrag 8 symbolisiert. Zu jedem Prefetch-Eintrag 8 sind in der Speicherverwaltung 3 die zugehörige Hauptspeicheradresse 9, ein Valid-Bit 10 und ein Refill-Bit 11 gespeichert. Mit den Valid-Bits 10 wird vermerkt, welche Bereiche gültige Daten beinhalten. Die Refill-Bits 11 zeigen an, dass noch Daten aus dem Hauptspeicher geladen werden müssen. Ist für einen Eintrag 8 ein Valid-Bit 10 oder ein Refill-Bit 11 gesetzt, zeigt dies auch an, dass der betreffende Bereich in Benutzung, also nicht mehr frei ist. In anderen Ausführungsformen der Erfindung können in der Speicherverwaltung 3 noch weitere Informationen über die Prefetch-Einträge 8 gespeichert sein.

Zusammenfassend betrifft die Erfindung ein Verfahren und eine Vorrichtung zur Beschleunigung von Zugriffen eines Prozessors auf Daten in einem Hauptspeicher mittels eines Zwischenspeichers, wobei vom Prozessor angeforderte Daten mit im Zwischenspeicher vorhandenen Daten verglichen werden, die im Falle einer Übereinstimmung mit den angeforderten Daten an den Prozessor übertragen werden, wobei in Abhängigkeit von den angeforderten Daten weitere Daten im voraus aus dem Hauptspeicher in den Zwischenspeicher übertragen werden. Der Erfindung liegt die Aufgabe zugrunde, ein Verfahren bzw. eine Vorrichtung zur Beschleunigung von Zugriffen eines Prozessors auf Daten in einem Hauptspeicher anzugeben, mittels dem bzw. der Daten aus mehreren Prefetch-Vorgängen in einem Prefetch-Speicher gespeichert werden können. Diese Aufgabe wird bei einem Verfahren bzw. einer Vorrichtung der eingangs genannten Art dadurch gelöst, dass im Zwischenspeicher die im Hauptspeicher auf die angeforderten Daten folgenden Daten als ein Eintrag in einem Bereich gespeichert werden, wobei für sich an angeforderte Daten, die im Zwischenspeicher vorhanden sind, anschließende Daten derselbe Bereich im Zwischenspeicher verwendet wird, wobei für sich an angeforderte Daten, die nicht im Zwischenspeicher vorhanden sind, anschließende Daten ein neuer Bereich im Zwischenspeicher angelegt wird und wobei im Zwischenspeicher Daten in zumindest zwei Bereichen speicherbar sind. Durch die Unterteilung des Zwischenspeichers in mindestens zwei Bereiche ist es möglich, auch z.B. Programmverzweigungen des Prozessors effektiv zu unterstützen. Wird innerhalb eines linearen Programmablaufs vom Prozessor in ein Unterprogramm verzweigt, werden die gerade vorab geladenen Daten im Zwischenspeicher gehalten. Die neuen vom Hauptspeicher geholten Daten für das jetzt abzuarbeitende Unterprogramm werden in einem weiteren Bereich des Zwischenspeichers abgelegt. Führt der Prozessor einen Rücksprung vom Unterprogramm zum vorher ausgeführten Programmteil aus, dann stehen die benötigten (Befehls-)Daten noch in dem vorherigen Bereich und können dem Prozessor sofort, also ohne langsamen Hauptspeicherzugriff, zur Verfügung gestellt werden.

Bei einem herkömmlichen Cache besteht das Problem, dass bei Programmsequenzen, die größer als der Cache sind, einmal geladene und vom Prozessor ausgeführte Befehlsdaten immer wieder durch neue Befehlsdaten überschrieben werden. Sein großer Vorteil, dass bei einem zweiten Prozessorzugriff die Befehlsdaten bereits im Cache stehen, ist dann nicht mehr gegeben. Ein Cache kann aber auch nicht in beliebiger Größe realisiert werden, da schneller Speicher sehr teuer ist. Die erfindungsgemäße Prefetch-Vorrichtung hat mit größeren Programmsequenzen kein Problem, da sie die Prozessor-Befehlsausführungszeit nutzt, um während dieser kontinuierlich neue Befehlsdaten nachzuladen.

Gegenüber einem einfachen Prefetch-Mechanismus ist die erfindungsgemäße Prefetch-Vorrichtung wesentlich effektiver. Sie kann nicht nur bei vollkommen linearen Befehlsabfolgen den Prozessor schnell mit Befehlsdaten versorgen, sondern unterstützt auch mehrfache Programmverzweigungen, wie sie z.B. bei verschachtelten Unterprogrammen vorkommen. Mit der erfindungsgemäßen Prefetch-Vorrichtung ist dadurch die Wahrscheinlichkeit wesentlich höher, dass die von ihr vorab vom Hauptspeicher geholten Befehlsdaten auch tatsächlich vom Prozessor benutzt werden und diese nicht vorher schon wieder überschriebene werden.

## Patentansprüche

1. Verfahren zur Beschleunigung von Zugriffen eines Prozessors (6) auf Daten in einem Hauptspeicher (7) mittels eines Zwischenspeichers (4), wobei vom Prozessor (6) angeforderte Daten mit im Zwischenspeicher (4) vorhandenen Daten verglichen werden, die im Falle einer Übereinstimmung mit den angeforderten Daten an den Prozessor (6) übertragen werden, wobei in Abhängigkeit von den angeforderten Daten weitere Daten im voraus aus dem Hauptspeicher (7) in den Zwischenspeicher (4) übertragen werden,
wobei im Zwischenspeicher (4) die im Hauptspeicher (7) auf die angeforderten Daten folgenden Daten als ein Eintrag (8) in einem Bereich gespeichert werden, wobei für sich an angeforderte Daten, die im Zwischenspeicher (4) vorhanden sind, anschließende Daten derselbe Bereich im Zwischenspeicher (4) verwendet wird, wobei für sich an angeforderte Daten, die nicht im Zwischenspeicher (4) vorhanden sind, anschließende Daten ein neuer Bereich im Zwischenspeicher (4) angelegt wird
**dadurch gekennzeichnet, dass**
im Zwischenspeicher (4) Daten in zumindest zwei Bereichen speicherbar sind und die Anzahl und Größe der Bereiche im Zwischenspeicher (4) parametrierbar sind.

2. Verfahren nach Anspruch 1,
wobei die Größe der Bereiche im Zwischenspeicher (4) dynamisch in Abhängigkeit von der zugehörigen Hauptspeicheradresse (9) zugewiesen wird, wobei die Zuordnung der Hauptspeicheradressen (9) zu den Größen der Bereiche parametrierbar ist.

3. Verfahren nach einem der vorhergehenden Ansprüche,
wobei zumindest ein Bereich im Zwischenspeicher (4) größer ist als die mit einem Lesezugriff aus dem Hauptspeicher (7) übertragbare Datenmenge und der noch freie Teil des Bereiches mit Daten aus dem Hauptspeicher (7) aufgefüllt wird, während der Prozessor (6) keine neuen Daten anfordert.

4. Verfahren nach einem der vorhergehenden Ansprüche,
wobei vom Prozessor (6) angeforderte und im Zwischenspeicher (4) vorhandene Daten nach Übertragung an den Prozessor (6) aus dem Zwischenspeicher (4) löschbar sind.

5. Verfahren nach Anspruch 4,
wobei zumindest ein Bereich im Zwischenspeicher (4) größer ist als die mit einem Lesezugriff aus dem Hauptspeicher (7) übertragbare Datenmenge und wobei ein mit löschbaren Daten belegter Teil des Bereiches im Zwischenspeicher (4) durch sich an die im restlichen Teil des Bereiches vorhandenen Daten anschließende Daten aus dem Hauptspeicher (7) auffüllbar ist.

6. Verfahren nach einem der vorhergehenden Ansprüche,
wobei die Einträge (8) in den jeweiligen Bereichen des Zwischenspeichers (4) mit einer LRU-
Nummer **gekennzeichnet** werden, die eine zeitliche Reihenfolge der Zugriffe des Prozessors (6) auf die jeweiligen Bereiche angibt.

7. Verfahren nach Anspruch 6,
wobei zumindest ein Bereich, beginnend mit dem frühestgenutzten Bereich im Zwischenspeicher (4), mit einem neu anzulegenden Bereich, für den im Zwischenspeicher (4) kein hinreichender Platz mehr verfügbar ist, überschrieben wird.

8. Verfahren nach Anspruch 6 oder 7,
wobei bei mehr als einem noch nicht vollständig mit Daten gefüllten Bereich die jeweiligen Bereiche, beginnend mit dem letztgenutzten Bereich, mit Daten aus dem Hauptspeicher (7) auffüllbar sind.

9. Verfahren nach einem der vorhergehenden Ansprüche,
wobei das Anlegen eines neuen Bereiches durch vom Prozessor (6) auf ein dafür vorgesehenes Register geschriebene Daten unter Übergabe der gewünschten Hauptspeicheradresse (9) ausgelöst wird.

10. Verfahren nach einem der vorhergehenden Ansprüche,
wobei eine Speicherverwaltung (3) für jeden Eintrag (8) im Zwischenspeicher (4) die notwendigen Informationen wie insbesondere die zugehörige Hauptspeicheradresse (9), ein Valid-Bit (10) zur Kennzeichnung der Gültigkeit der Daten und ein Refill-Bit (11) zur Kennzeichnung der Notwendigkeit zum Auffüllen des Bereiches mit Daten aus dem Hauptspeicher (7) aufweist.

11. Verfahren nach einem der vorhergehenden Ansprüche,
wobei der Zwischenspeicher (4) in Anteile fester Größe unterteilt ist, die zu den jeweiligen Bereichen zusammenfassbar sind.

12. Verfahren nach Anspruch 11,
wobei die Anteile fester Größe in Blöcke fester Größe unterteilt sind, deren Größe der mit einem Lesezugriff an den Prozessor (6) übertragbaren Datenmenge entspricht.

13. Verfahren nach einem der vorhergehenden Ansprüche,
wobei der Zwischenspeicher (4) über ein Advanced High-performance Bus- Interface (5) mit dem Hauptspeicher (7) verbunden wird.

14. Verfahren nach einem der vorhergehenden Ansprüche,
wobei beim Anlegen eines neuen Bereiches die Bereiche als löschbar **gekennzeichnet** werden, die eine Hauptspeicheradresse (9) aufweisen, die innerhalb des Adressbereiches des neuen Bereiches liegt.

15. Verfahren nach einem der Ansprüche 5 bis 14,
wobei beim Verschieben des Adressbereiches eines Bereiches durch Löschen der an den Prozessor (6) übertragenen Daten und Auffüllen mit neuen Daten aus dem Hauptspeicher (7) die Bereiche als löschbar **gekennzeichnet** werden, die eine Hauptspeicheradresse (9) aufweisen, die innerhalb des verschobenen Adressbereiches liegt.

16. Vorrichtung (1) zur Beschleunigung von Zugriffen eines Prozessors (6) auf Daten in einem Hauptspeicher (7) mittels eines Zwischenspeichers (4), wobei die Vorrichtung (1) eine Speicherverwaltung (3) zum Vergleich von vom Prozessor (6) angeforderten Daten mit im Zwischenspeicher (4) vorhandenen Daten aufweist, die im Falle einer Übereinstimmung mit den angeforderten Daten an den Prozessor (6) übertragbar sind, wobei in Abhängigkeit von den angeforderten Daten weitere Daten im voraus aus dem Hauptspeicher (7) in den Zwischenspeicher (4) übertragbar sind,
wobei im Zwischenspeicher (4) die im Hauptspeicher (7) auf die angeforderten Daten folgenden Daten als ein Eintrag (8) in einem Bereich speicherbar sind, wobei für sich an angeforderte Daten, die im Zwischenspeicher (4) vorhanden sind, anschließende Daten derselbe Bereich im Zwischenspeicher (4) verwendbar ist,
**dadurch gekennzeichnet, dass** für sich an angeforderte Daten, die nicht im Zwischenspeicher (4) vorhanden sind, anschließende Daten ein neuer Bereich im Zwischenspeicher (4) anlegbar ist und wobei im Zwischenspeicher (4) Daten in zumindest zwei Bereichen speicherbar sind und wobei die Anzahl und Größe der Bereiche im Zwischenspeicher (4) parametrierbar sind.

17. Vorrichtung nach Anspruch 16,
wobei die Größe der Bereiche im Zwischenspeicher (4) dynamisch in Abhängigkeit von der zugehörigen Hauptspeicheradresse (9) zuweisbar ist, wobei die Zuordnung der Hauptspeicheradressen (9) zu den Größen der Bereiche parametrierbar ist.

18. Vorrichtung nach einem der Ansprüche 16 bis 17,
wobei zumindest ein Bereich im Zwischenspeicher (4) größer ist als die mit einem Lesezugriff aus dem Hauptspeicher (7) übertragbare Datenmenge, wobei der noch freie Teil des Bereiches mit Daten aus dem Hauptspeicher (7) auffüllbar ist, während der Prozessor (6) keine neuen Daten anfordert.

19. Vorrichtung nach einem der Ansprüche 16 bis 18,
wobei vom Prozessor (6) angeforderte und im Zwischenspeicher (4) vorhandene Daten nach Übertragung an den Prozessor (6) aus dem Zwischenspeicher (4) löschbar sind.

20. Vorrichtung nach Anspruch 19,
wobei zumindest ein Bereich im Zwischenspeicher (4) größer ist als die mit einem Lesezugriff aus dem Hauptspeicher (7) übertragbare Datenmenge und wobei ein mit löschbaren Daten belegter Teil des Bereiches im Zwischenspeicher (4) durch sich an die im restlichen Teil des Bereiches vorhandenen Daten anschließende Daten aus dem Hauptspeicher (7) auffüllbar ist.

21. Vorrichtung nach einem der Ansprüche 16 bis 20,
wobei die Einträge (8) in den jeweiligen Bereichen des Zwischenspeichers (4) mit einer LRU-
Nummer kennzeichenbar sind, die eine zeitliche Reihenfolge der Zugriffe des Prozessors (6) auf die jeweiligen Bereiche angibt.

22. Vorrichtung nach Anspruch 21,
wobei zumindest ein Bereich, beginnend mit dem frühestgenutzten Bereich im Zwischenspeicher (4), mit einem neu anzulegenden Bereich, für den im Zwischenspeicher (4) kein hinreichender Platz mehr verfügbar ist, überschreibbar ist.

23. Vorrichtung nach Anspruch 21 oder 22,
wobei bei mehr als einem noch nicht vollständig mit Daten gefüllten Bereich die jeweiligen Bereiche, beginnend mit dem letztgenutzten Bereich, mit Daten aus dem Hauptspeicher (7) auffüllbar sind.

24. Vorrichtung nach einem der Ansprüche 16 bis 23,
wobei das Anlegen eines neuen Bereiches durch vom Prozessor (6) auf ein dafür vorgesehenes Register geschriebene Daten unter Übergabe der gewünschten Hauptspeicheradresse (9) auslösbar ist.

25. Vorrichtung nach einem der Ansprüche 16 bis 24,
wobei die Speicherverwaltung (3) für jeden Eintrag (8) im Zwischenspeicher (4) die notwendigen Informationen wie insbesondere die zugehörige Hauptspeicheradresse (9), ein Valid-Bit (10) zur Kennzeichnung der Gültigkeit der Daten und ein Refill-Bit (11) zur Kennzeichnung der Notwendigkeit zum Auffüllen des Bereiches mit Daten aus dem Hauptspeicher (7) aufweist.

26. Vorrichtung nach einem der Ansprüche 16 bis 25,
wobei der Zwischenspeicher (4) in Anteile fester Größe unterteilt ist, die zu den jeweiligen Bereichen zusammenfassbar sind.

27. Vorrichtung nach Anspruch 26,
wobei die Anteile fester Größe in Blöcke fester Größe unterteilt sind, deren Größe der mit einem Lesezugriff aus dem Hauptspeicher (7) übertragbaren Datenmenge entspricht.

28. Vorrichtung nach einem der Ansprüche 16 bis 27,
wobei die Vorrichtung (1) über ein Advanced High-performance Bus- Interface (5) mit dem Hauptspeicher (7) verbindbar ist.

29. Vorrichtung nach einem der Ansprüche 16 bis 28,
wobei beim Anlegen eines neuen Bereiches die Bereiche als löschbar kennzeichenbar sind, die eine Hauptspeicheradresse (9) aufweisen, die innerhalb des Adressbereiches des neuen Bereiches liegt.

30. Vorrichtung nach einem der Ansprüche 20 bis 29,
wobei beim Verschieben des Adressbereiches eines Bereiches durch Löschen der an den Prozessor (6) übertragenen Daten und Auffüllen mit neuen Daten aus dem Hauptspeicher (7) die Bereiche als löschbar kennzeichenbar sind, die eine Hauptspeicheradresse (9) aufweisen, die innerhalb des verschobenen Adressbereiches liegt.

31. Vorrichtung nach einem der Ansprüche 16 bis 30,
wobei die Vorrichtung (1) in einer speicherprogrammierbaren oder einer numerischen Steuerung verwendet wird.

32. Vorrichtung nach einem der Ansprüche 16 bis 31,
wobei die Vorrichtung (1) in einen Prozessor (6) oder ein Bus-Interface (2, 5) integrierbar ist.

## Claims

1. Method for increasing the access speed of a processor (6) to data in a main memory (7) by means of an interim memory (4), whereby data requested by the processor (6) is compared with data present in the interim memory (4), which is transmitted to the processor (6) if it matches the requested data, whereby further data is transferred in advance into the interim memory (4) from the main memory (7) depending on the requested data,
whereby in the interim memory (4) the data following the requested data in the main memory (7) is stored as an entry (8) in an area, whereby for data following on from requested data which is present in the interim memory (4) the same area in the interim memory (4) is used, whereby for data not following on from requested data which is not present in the interim memory (4) a new area is set up in the interim memory (4)
**characterised in that**
data is able to be stored in at least two areas in the interim memory (4) and parameters are able to be set for the number and size of the areas in the interim memory (4).

2. Method according to claim 1,
whereby the size of the areas in the interim memory (4) is allocated dynamically depending on the associated main memory address (9), whereby parameters are able to be set for the assignment of the main memory addresses (9) to the sizes of the areas.

3. Method according to one of the preceding claims, whereby at least one area in the interim memory (4) is larger than the amount of data able to be transmitted with a read access from the main memory (7) and the part of the area still free is refilled with data from the main memory (7) while the processor (6) is not requesting any data.

4. Method according to one of the preceding claims, whereby data requested by the processor (6) and present in the interim memory (4) is able to be erased from the interim memory (4) after transmission to the processor (6).

5. Method according to claim 4,
whereby at least one area in the interim memory (4) is larger than the amount of data able to be transmitted with a read access from the main memory (7), whereby a part of the area in the interim memory (4) occupied by erasable data is able to be refilled by data following on from the data present in the remaining part of the area from the main memory (7).

6. Method according to one of the preceding claims, whereby the entries (8) in the respective areas of the interim memory (4) are identified by an LRU number, which specifies a temporal sequence of the accesses of the processor (6) to the respective areas.

7. Method according to claim 6,
whereby at least one area, beginning with the earliest-used area in the interim memory (4), is overwritten with a new area to be created, for which sufficient space is no longer available in the interim memory (4).

8. Method according to claim 6 or 7,
whereby, for more than one area not yet completely filled with data, the respective areas, beginning with the least recently used area, are able to be refilled with data from the main memory (7).

9. Method according to one of the preceding claims,
whereby the creation of a new area by data written by the processor (6) to a register provided for the purpose is triggered by transfer of the desired main memory address (9) .

10. Method according to one of the preceding claims, whereby memory management (3), for each entry (8) in the interim memory (4), has the necessary information, such as especially the associated main memory address (9), a valid bit (10) to indicate the validity of the data and a refill bit (11) to indicate the necessity of refilling the area with data from the main memory (7).

11. Method according to one of the preceding claims, whereby the interim memory (4) is divided into portions of fixed size, which are able to be combined into the respective areas.

12. Method according to claim 11,
whereby the portions of fixed size are subdivided into blocks of fixed size, the size of which corresponds to a quantity of data able to be transmitted by a read access to the processor (6).

13. Method according to one of the preceding claims, whereby the interim memory is connected (4) via an Advanced High-performance Bus Interface (5) to the main memory (7).

14. Method according to one of the preceding claims, whereby when a new area is set up, the areas are identified as erasable which have a main memory address (9) which lies within the address range of the new area.

15. Method according to one of claims 5 to 14,
whereby, on shifting of the address range of an area by erasing the data transmitted to the processor (6) and
on refilling with new data from main memory (7), the areas are identified as erasable which have a main memory address (9) lying within the shifted address range.

16. A device (1) for increasing the access speed of a processor (6) to data in a main memory (7) by means of an interim memory (4), whereby the device (1) has memory management (3) for comparing data requested by the processor (6) with data present in the interim memory (4), which, if it matches the requested data, is able to be transmitted to the processor (6), whereby further data is transferred in advance into the interim memory (4) from the main memory (7) as a function of the requested data,
whereby in the interim memory (4) the data in the main memory (7) following the requested data is able to be stored as an entry (8) in an area, whereby for data following on from requested data which is present in the interim memory (4) the same area in the interim memory (4) is able to be used,
**characterised in that**, for data following on from requested data which is not in the interim memory (4) a new area is able to be set up in the interim memory (4) and whereby data is able to be stored in the interim memory (4) in at least two areas and whereby parameters are able to be set for the number and size of the areas in the interim memory (4).

17. Device according to claim 16,
whereby the size of the areas in the interim memory (4) is able to be assigned dynamically depending on the associated main memory address (9), whereby parameters can be set for the assignment of the main memory addresses (9) to the sizes of the areas.

18. Device according to one of claims 16 to 17,
whereby at least one area in the interim memory (4) is larger that the amount of data able to be transmitted with a read access from the main memory (7), whereby the part of the area still free is able to be refilled with data from the main memory (7) while the processor (6) is not requesting any new data.

19. Device according to one of claims 16 to 18,
whereby data requested by the processor (6) and present in the interim memory (4) is able to be erased from the interim memory (4) after transmission to the processor (6).

20. Device according to claim 19,
whereby at least one area in the interim memory (4) is larger that the amount of data able to be transmitted with a read access from the main memory (7) and whereby a part of the area in the interim memory (4) occupied by erasable data is able to be refilled with data from the main memory (7) following on from the data present in the remaining part of the area.

21. Device according to one of claims 16 to 20, whereby the entries (8) in the respective areas of the interim memory (4) are able to be identified by an LRU number, which specifies a chronological order of the accesses of the processor (6) to the respective areas.

22. Device according to claim 21,
with at least one area, beginning with the least recently used area in the interim memory (4), is able to be overwritten by a new area to be created, for which sufficient space is no longer available in the interim memory (4).

23. Device according to claim 21 or 22,
whereby, for more than one area not yet completely filled with data, the respective areas, beginning with the last-used area, are able to be refilled with data from the main memory (7).

24. Device according to one of claims 16 to 23, whereby the creation of a new area by data written by the processor (6) to a register provided for the purpose is able to be triggered by transfer of the desired main memory address (9) .

25. Device according to one of claims 16 to 24, whereby memory management (3), for each entry (8) in the interim memory (4), has the necessary information, such as especially the associated main memory address (9), a valid bit (10) to indicate the validity of the data and a refill bit (11) to indicate the necessity of refilling the area with data from the main memory (7).

26. Device according to one of claims 16 to 25, whereby the interim memory (4) is divided into portions of fixed size which are able to be combined into the respective areas.

27. Device according to claim 26,
whereby the portions of fixed size are subdivided into blocks of fixed size, the size of which corresponds to an amount of data able to be transmitted by a read access from the main memory (7).

28. Device according to one of claims 16 to 27, whereby the interim memory is able to be connected via an Advanced High-performance Bus Interface (5) to the main memory (7).

29. Device according to one of claims 16 to 28 whereby, when a new area is set up, the areas are identified as erasable which have a main memory address (9) which lies within the address range of the new area.

30. Device according to one of claims 20 to 29, whereby, when an address range of an area is shifted by erasing the data transmitted to the processor (6) and
when the area is refilled with new data from main memory (7), the areas are identified as erasable which have a main memory address (9) lying within the shifted address range.

31. Device according to one of claims 16 to 30, whereby the device (1) is used in a programmable logic controller or in a numeric control.

32. Device according to one of claims 16 to 31, whereby the device (1) is able to be integrated into a processor (6) or into a bus interface (2, 5).

## Revendications

1. Procédé pour accélérer des accès d'un processeur (6) à des données dans une mémoire principale (7) au moyen d'une mémoire intermédiaire (4), des données demandées par le processeur (6) étant comparées avec des données présentes dans la mémoire intermédiaire (4) qui sont transmises au processeur (6) en cas de coïncidence avec les données demandées, d'autres données étant, en fonction des données demandées, transmises d'avance de la mémoire principale (7) à la mémoire intermédiaire (4), les données faisant suite aux données demandées dans la mémoire principale (7) étant stockées, dans la mémoire intermédiaire (4), en tant qu'entrée (8) dans une zone, la même zone étant utilisée, dans la mémoire intermédiaire (4), pour des données qui font suite à des données demandées présentes dans la mémoire intermédiaire (4), une nouvelle zone étant créée, dans la mémoire intermédiaire (4), pour des données faisant suite à des données demandées non présentes dans la mémoire intermédiaire (4), **caractérisé en ce que**, dans la mémoire intermédiaire (4), des données peuvent être stockées dans au moins deux zones, et le nombre et la taille des zones, dans la mémoire intermédiaire (4), sont paramétrables.

2. Procédé selon la revendication 1, la taille des zones, dans la mémoire intermédiaire (4), étant allouée dynamiquement en fonction de l'adresse associée (9) de la mémoire principale, l'affectation des adresses (9) de la mémoire principale aux tailles des zones étant paramétrable.

3. Procédé selon l'une des revendications précédentes, au moins une zone étant, dans la mémoire intermédiaire (4), plus grande que le volume de données transmissible à partir de la mémoire principale (7) au moyen d'un accès en lecture et la partie encore libre de la zone étant complétée par des données issues de la mémoire principale (7) pendant que le processeur (6) ne demande pas de nouvelles données.

4. Procédé selon l'une des revendications précédentes, des données demandées par le processeur (6) et présentes dans la mémoire intermédiaire (4) pouvant être effacées de la mémoire intermédiaire (4) après la transmission au processeur (6).

5. Procédé selon la revendication 4, au moins une zone étant, dans la mémoire intermédiaire (4), plus grande que le volume de données transmissible à partir de la mémoire principale (7) au moyen d'un accès en lecture, et une partie de la zone de la mémoire intermédiaire (4) occupée par des données effaçables pouvant être complétée par des données issues de la mémoire principale (7) et qui font suite aux données présentes dans la partie restante de la zone.

6. Procédé selon l'une des revendications précédentes, les entrées (8) dans les zones respectives de la mémoire intermédiaire (4) étant marquées par un numéro LRU qui indique un ordre temporel des accès du processeur (6) aux zones respectives.

7. Procédé selon la revendication 6, au moins une zone, en commençant par la zone utilisée le plus tôt dans la mémoire intermédiaire (4), étant remplacée par une zone à créer nouvellement pour laquelle il n'y a plus de place suffisante disponible dans la mémoire intermédiaire (4).

8. Procédé selon la revendication 6 ou 7, les zones respectives, dans le cas de plus d'une zone non entièrement remplie avec des données, pouvant être complétées par des données issues de la mémoire principale (7) en commençant par la zone utilisée en dernier lieu.

9. Procédé selon l'une des revendications précédentes, la création d'une nouvelle zone étant déclenchée par des données écrites par le processeur (6) sur un registre prévu à cet effet avec transfert de l'adresse de mémoire principale souhaitée (9).

10. Procédé selon l'une des revendications précédentes, une gestion de mémoire (3) présentant, pour chaque entrée (8) dans la mémoire intermédiaire (4), les informations nécessaires telles que, notamment, l'adresse associée (9) de la mémoire principale, un bit de validité (10) pour marquer la validité des données et un bit de complètement (11) pour marquer la nécessité de compléter la zone par des données issues de la mémoire principale (7).

11. Procédé selon l'une des revendications précédentes, la mémoire intermédiaire (4) étant subdivisée en parties de taille fixe qui peuvent être réunies pour constituer les zones respectives.

12. Procédé selon la revendication 11, les parties de taille fixe étant subdivisées en blocs de taille fixe dont la taille correspond au volume de données pouvant être transmis au processeur (6) au moyen d'un accès en lecture.

13. Procédé selon l'une des revendications précédentes, la mémoire intermédiaire (4) étant reliée à la mémoire principale (7) par l'intermédiaire d'une interface de bus Advanced High Performance (5).

14. Procédé selon l'une des revendications précédentes, étant marquées comme effaçables, lors de la création d'une nouvelle zone, les zones qui présentent une adresse de mémoire principale (9) qui se trouve dans la zone d'adresses de la nouvelle zone.

15. Procédé selon l'une des revendications 5 à 14, étant marquées comme effaçables, lors du décalage de la zone d'adresses d'une zone par effacement des données transmises au processeur (6) et complètement avec de nouvelles données issues de la mémoire principale (7), les zones qui présentent une adresse de mémoire principale (9) qui se trouve dans la zone d'adresses décalée.

16. Dispositif (1) pour accélérer des accès d'un processeur (6) à des données dans une mémoire principale (7) au moyen d'une mémoire intermédiaire (4), le dispositif (1) comportant une gestion de mémoire (3) pour comparer des données demandées par le processeur (6) avec des données présentes dans la mémoire intermédiaire (4) qui peuvent être transmises au processeur (6) en cas de coïncidence avec les données demandées, d'autres données pouvant, en fonction des données demandées, être transmises d'avance de la mémoire principale (7) à la mémoire intermédiaire (4), les données faisant suite aux données demandées dans la mémoire principale (7) pouvant être stockées, dans la mémoire intermédiaire (4), en tant qu'entrée (8) dans une zone, la même zone pouvant être utilisée, dans la mémoire intermédiaire (4), pour des données qui font suite à des données demandées présentes dans la mémoire intermédiaire (4), **caractérisé en ce qu'**une nouvelle zone peut être créée dans la mémoire intermédiaire (4) pour des données faisant suite à des données demandées non présentes dans la mémoire intermédiaire (4) et des données pouvant être stockées dans au moins deux zones, dans la mémoire intermédiaire (4), et le nombre et la taille des zones, dans la mémoire intermédiaire (4), étant paramétrables.

17. Dispositif selon la revendication 16, la taille des zones, dans la mémoire intermédiaire (4), pouvant être allouée dynamiquement en fonction de l'adresse associée (9) de la mémoire principale, l'affectation des adresses (9) de la mémoire principale aux tailles des zones étant paramétrable.

18. Dispositif selon l'une des revendications 16 à 17, au moins une zone étant, dans la mémoire intermédiaire (4), plus grande que le volume de données transmissible à partir de la mémoire principale (7) au moyen d'un accès en lecture, la partie encore libre de la zone pouvant être complétée par des données issues de la mémoire principale (7) pendant que le processeur (6) ne demande pas de nouvelles données.

19. Dispositif selon l'une des revendications 16 à 18, des données demandées par le processeur (6) et présentes dans la mémoire intermédiaire (4) pouvant être effacées de la mémoire intermédiaire (4) après la transmission au processeur (6).

20. Dispositif selon la revendication 19, au moins une zone étant, dans la mémoire intermédiaire (4), plus grande que le volume de données transmissible à partir de la mémoire principale (7) au moyen d'un accès en lecture, et une partie de la zone de la mémoire intermédiaire (4) occupée par des données effaçables pouvant être complétée par des données issues de la mémoire principale (7) et qui font suite aux données présentes dans la partie restante de la zone.

21. Dispositif selon l'une des revendications 16 à 20, les entrées (8) dans les zones respectives de la mémoire intermédiaire (4) pouvant être marquées par un numéro LRU qui indique un ordre temporel des accès du processeur (6) aux zones respectives.

22. Dispositif selon la revendication 21, au moins une zone, en commençant par la zone utilisée le plus tôt dans la mémoire intermédiaire (4), pouvant être remplacée par une zone à créer nouvellement pour laquelle il n'y a plus de place suffisante disponible dans la mémoire intermédiaire (4).

23. Dispositif selon la revendication 21 ou 22, les zones respectives, dans le cas de plus d'une zone non entièrement remplie avec des données, pouvant être complétées par des données issues de la mémoire principale (7) en commençant par la zone utilisée en dernier lieu.

24. Dispositif selon l'une des revendications 16 à 23, la création d'une nouvelle zone pouvant être déclenchée par des données écrites par le processeur (6) sur un registre prévu à cet effet avec transfert de l'adresse de mémoire principale souhaitée (9).

25. Dispositif selon l'une des revendications 16 à 24, une gestion de mémoire (3) présentant, pour chaque entrée (8) dans la mémoire intermédiaire (4), les informations nécessaires telles que, notamment, l'adresse associée (9) de la mémoire principale, un bit de validité (10) pour marquer la validité des données et un bit de complètement (11) pour marquer la nécessité de compléter la zone par des données issues de la mémoire principale (7).

26. Dispositif selon l'une des revendications 16 à 25, la mémoire intermédiaire (4) étant subdivisée en parties de taille fixe qui peuvent être réunies pour constituer les zones respectives.

27. Dispositif selon la revendication 26, les parties de taille fixe étant subdivisées en blocs de taille fixe dont la taille correspond au volume de données pouvant être transmis à partir de la mémoire principale (7) au moyen d'un accès en lecture.

28. Dispositif selon l'une des revendications 16 à 27, le dispositif (1) pouvant être relié à la mémoire principale (7) par l'intermédiaire d'une interface de bus Advanced High Performance (5).

29. Dispositif selon l'une des revendications 16 à 28, pouvant être marquées comme effaçables, lors de la création d'une nouvelle zone, les zones qui présentent une adresse de mémoire principale (9) qui se trouve dans la zone d'adresses de la nouvelle zone.

30. Dispositif selon l'une des revendications 20 à 29, pouvant être marquées comme effaçables, lors du décalage de la zone d'adresses d'une zone par effacement des données transmises au processeur (6) et complètement avec de nouvelles données issues de la mémoire principale (7), les zones qui présentent une adresse de mémoire principale (9) qui se trouve dans la zone d'adresses décalée.

31. Dispositif selon l'une des revendications 16 à 30, le dispositif (1) étant utilisé dans une commande par programme enregistré ou une commande numérique.

32. Dispositif selon l'une des revendications 16 à 31, le dispositif (1) pouvant être intégré à un processeur (6) ou à une interface de bus (2, 5).
